# EUROPEAN PATENT SPECIFICATION

(11) **EP 1 689 819 B1**
(45) Date of publication and mention of the grant of the patent: **10.08.2011**
(21) Application number: 04798029.7
(22) Date of filing: 20.11.2004
(51) Int. Cl.: C09B 67/22

(54) **DISPERSE DYE MIXTURES**
DISPERSIONSFARBSTOFFMISCHUNGEN
MELANGES DE COLORANTS DISPERSES

(30) Priority: 28.11.2003 GB 0327719
(43) Date of publication of application: 16.08.2006
(73) Proprietor: DyStar Colours Deutschland GmbH, 65926 Frankfurt am Main (DE)
(72) Inventor: GRUND, Clemens, 65795 Hattersheim (DE); RABJOHNS, Michael, Alan, Manchester M20 2PD (GB); LEAVER, Alan, Thomas, Manchester M30 9LR (GB); BRIERLEY, David, Oldham OL2 6EL (GB)
(86) International application number: PCT/EP2004/013209
(87) International publication number: WO 2005/054375

(56) References cited:
- EP-A1- 0 469 723
- EP-A1- 0 551 725
- EP-A1- 0 598 303
- EP-A1- 0 640 667
- EP-A2- 0 305 886
- EP-A2- 0 363 034
- EP-A2- 0 484 962
- EP-A2- 0 492 893
- WO-A1-01/94314
- WO-A1-97/04031
- DATABASE WPI Section Ch, Week 199518 Derwent Publications Ltd., London, GB; Class A60, AN 1995-137062 XP002315935 & JP 07 062260 A (SUMITOMO CHEM CO LTD) 7 March 1995 (1995-03-07)

## Description

This invention relates to mixtures of dull blue to navy disperse dyes, particularly a mixture of disperse polycyclic dyes with disperse azo-dyes, to a process for the coloration of synthetic textile materials and to textile materials when coloured with the mixture of dyes.

Mixed disperse dyes and their use for dyeing polyester and its blends with other fibres such as cellulose, elastane, nylon and wool by normal exhaust dyeing, continuous dyeing and direct printing techniques are already known for example from the document WO 9704031 or EP O 492 893 . However, they have certain application defects, such as for example relatively poor leveling/migration properties, an overly large dependence of the colour yield on varying dyeing parameters in the dyeing process or an insufficient colour build-up on polyester (good colour build-up results from the ability of a dye to provide a proportionally stronger dyeing when used in higher concentrations in the dye bath), or unsatisfactory fastness properties.

Thus there is a need for disperse dyes which provide dyeings of improved colour build-up and fastness properties, i.e. wash and light fastness properties of dyed polyester or its blends with other fibres such as cellulose, elastane, nylon and wool.

The present invention, then, provides dye mixtures of disperse dyes which provide dyeings of very good colour build up, wet and light fastness properties on polyester or its blends with other fibres.

The invention accordingly provides dye mixtures comprising one or more dyes of the herein below indicated and defined formula (I) 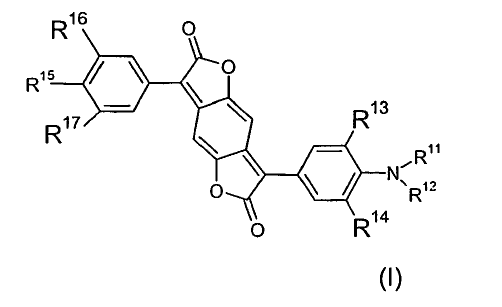 where
- R¹¹ and R¹²: are independently hydrogen, optionally substituted alkyl, alkenyl, cycloalkyl, aryl or aralkyl, or R¹¹ and R¹² together with the N atom can form a heterocyclic 5, 6 or 7 membered ring,
- R¹³ and R¹⁴: are independently hydrogen, halogen, or an optionally substituted alkyl, alkenyl or alkoxy or R¹¹ and R¹³ together with the N atom can form a heterocyclic 5, 6 or 7 membered ring,
- R¹² and R¹⁴: together with the N atom can form a heterocyclic 5, 6 or 7 membered ring,
- R¹⁵ is: hydrogen, halogen or optionally substituted alkyl or alkoxy group or - NR¹¹ R¹² where R¹¹ and R¹² are as defined above
- R¹⁶ and R¹⁷: are independently hydrogen, halogen, or an optionally substituted alkyl, alkenyl or alkoxy,
- R¹⁵ and R¹⁶: together with the N atom can form a heterocyclic 5,6 or 7 membered ring, or
- R¹⁵ and R¹⁷: together with the N atom can form a heterocyclic 5,6 or 7 membered ring
and optionally one or more, such as two or three, preferably 1 or 2, dyes of the herein below indicated and defined general formula (II) 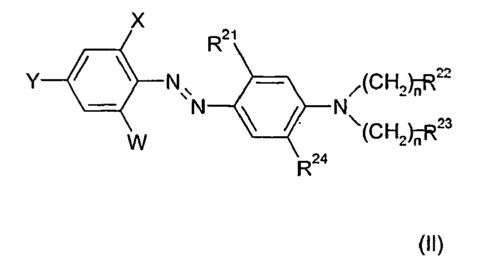 wherein
- X: and W are hydrogen, chlorine, bromine, iodine, nitro or nitrile
- Y: is nitro or cyano
- R²¹: is hydrogen, C₁ to C₄ alkyl, C₁ to C₄ alkoxy or NHCOZ where Z is hydrogen, C₁ to C₄ alkyl, amino, C₁ to C₄ alkoxy, aryl, aryloxy, aralkyl or aralkyloxy
- R²²: is hydrogen, cyano, alkoxycarbonyl of formula (a), 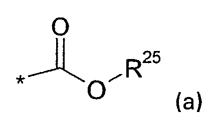
or is alkoxycarbonyloxy of formula (b) 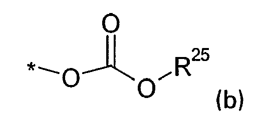 wherein
R²⁵ is C₁ to C₄ alkyl, aryl or aralkyl
- R²³: has one of the meanings of R ²²
- n: is an integer of 2 to 4
- R²⁴: is hydrogen, C₁ to C₄ alkyl or C₁ to C₄ alkoxy
and optionally one or more, such as two or three, preferably 1 or 2, dyes of the herein below indicated and defined general formula (III) 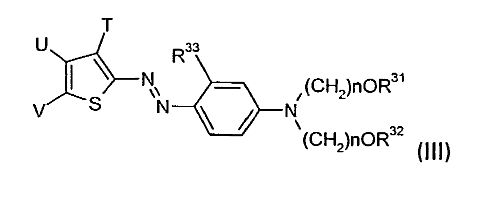 wherein
- T, U and V: are independently hydrogen, formyl, acetyl, chloro, bromo, cyano or nitro
- R³¹ and R³²: are independently C₁ to C₄ alkyl, alkenyl, aryl, aralkyl, carbonylalkyl, carbonylalkenyl, carbonylaryl, carbonylalkoxyalkyl or carbonyl- aryloxyal kyl.
- R³³: is hydrogen, halogen, C₁ to C₄ alkyl or C₁ to C₄ alkoxy, NHCOR³⁴, where R³⁴ is C₁ to C₄ alkyl or C₁ to C₄ alkoxy.

In case where R³³ is NHCOR³⁴ then (CH₂)ₙOR³¹/R³² are replaced by R³⁵ and R ³⁶ as given in structure (III) 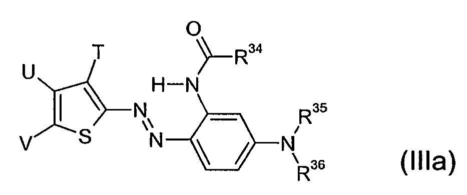 wherein
R³⁵ and R³⁶ are independently hydrogen, alkyl, alkenyl, aryl, aralkyl, alkoxyalkyl , aryloxyalkyl, alkoxycarbonylalkyl and alkylcarbonylalkoxy.

Alkyl R may be straight-chain or branched and is in particular C₁ to C₄ -alkyl, such as methyl, ethyl n-propyl, isopropyol, n-butyl, isobutyl, sec-butyl or tert-butyl. Methyl and ethyl are preferred.

The same logic applies to (C₁-C₄)-alkoxy groups.

Alkenyl R is in particular C₂-C₄- such as ethenyl, propenyl, butenyl.

Specific structures which would be of interest covered by the general formula (I) include for example as given in Table 1

**Table 1**

| Dye | R¹¹ | R¹² | R¹³ | R¹⁴ | R¹⁵ | R¹⁶ | R¹⁷ |
|---|---|---|---|---|---|---|---|
| I-1 | H | H | Methyl | H | H | H | H |
| I-2 | H | H | Ethyl | H | H | H | H |
| I-3 | H | H | Methyl | Methyl | H | H | H |
| I-4 | H | H | Chloro | H | H | H | H |
| I-5 | H | H | Iso-propyl | H | H | H | H |
| I-6 | H | H | Iso-butyl | H | H | H | H |
| I-7 | H | H | Iso-propyl | Methyl | H | H | H |
| I-8 | H | H | Iso-butyl | Methyl | H | H | H |
| I-9 | H | H | Methyl | Ethyl | H | H | H |
| I-10 | H | H | Methyl | Chloro | H | H | H |
| I-11 | H | H | Chloro | Ethyl | H | H | H |
| I-12 | H | H | lso-propyl | Ethyl | H | H | H |
| I-13 | H | H | Iso-butyl | Ethyl | H | H | H |
| I-14 | H | H | H | Methyl | Methyl | H | H |
| I-15 | H | H | H | Methyl | Ethyl | H | H |
| I-16 | H | H | H | Methyl | lso-propyl | H | H |
| I-17 | H | H | H | Methyl | Iso-butyl | H | H |
| I-18 | H | H | H | Ethyl | Iso-propyl | H | H |
| I-19 | H | H | H | Ethyl | Iso-butyl | H | H |
| I-20 | H | H | H | Ethyl | Methyl | H | H |
| I-21 | H | H | H | Ethyl | Ethyl | H | H |
| I-22 | H | H | Methyl | H | Methoxy | H | H |
| I-23 | H | H | Ethyl | H | Methoxy | H | H |
| I-24 | H | H | Methyl | H | Ethoxy | H | H |
| I-25 | H | H | Ethyl | H | Ethoxy | H | H |
| I-26 | H | H | Methyl | Methyl | Methoxy | H | H |
| I-27 | H | H | Methyl | Methyl | Ethoxy | H | H |
| I-28 | H | H | Methyl | H | Chloro | H | H |
| I-29 | H | H | Ethyl | H | Chloro | H | H |
| I-30 | H | H | Methyl | Methyl | Chloro | H | H |
| I-31 | H | H | Iso-propyl | H | Chloro | H | H |
| I-32 | H | H | lso-butyl | H | Chloro | H | H |
| I-33 | H | H | Methyl | H | NHCH₃ | H | H |
| I-34 | H | H | Methyl | H | NHC₂H₅ | H | H |
| I-35 | H | H | Ethyl | H | NHCH₃ | H | H |
| I-36 | H | H | Ethyl | H | NHC₂H₅ | H | H |
| I-37 | H | H | Iso-propyl | H | NHCH₃ | H | H |
| I-38 | H | H | Iso-propyl | H | NHC₂H₅ | H | H |
| I-39 | H | H | Iso-butyl | H | NHCH₃ | H | H |
| I-40 | H | H | lso-butyl | H | NHC₂H₅ | H | H |
| I-41 | H | H | Methyl | Methyl | NHCH₃ | H | H |
| I-42 | H | H | Methyl | Methyl | NHC₂H₅ | H | H |
| I-43 | H | H | Methyl | H | lso-propoxy | H | H |
| I-44 | H | H | Ethyl | H | lso-propoxy | H | H |
| I-45 | H | H | Methyl | H | lso-butoxy | H | H |
| I-46 | H | H | Ethyl | H | lso-butoxy | H | H |
| I-47 | H | H | Methyl | Methyl | lso-propoxy | H | H |
| I-48 | H | H | Methyl | Methyl | Iso-butoxy | H | H |
| I-49 | H | H | lso-propyl | H | lso-propoxy | H | H |
| I-50 | H | H | Iso-butyl | H | lso-butoxy | H | H |
| I-51 | Methyl | H | H | H | H | H | H |
| I-52 | Ethyl | H | H | H | H | H | H |
| I-53 | Ethyl | H | Methyl | H | H | H | H |
| I-54 | Methyl | H | Ethyl | H | H | H | H |
| I-55 | Methyl | Methyl | Methyl | H | H | H | H |
| I-56 | Methyl | Methyl | Ethyl | H | H | H | H |
| I-57 | Ethyl | Ethyl | Methyl | H | H | H | H |
| I-58 | Ethyl | Ethyl | Ethyl | H | H | H | H |
| I-59 | Methyl | Methyl | Methyl | Methyl | H | H | H |
| I-60 | Ethyl | Ethyl | Methyl | Methyl | H | H | H |

Preferred dyes of formula (II) are for example:

**Table 2**

| Dye | X | Y | W | R²¹ | n | R²² | R²³ | R²⁴ | R²⁵ | Z |
|---|---|---|---|---|---|---|---|---|---|---|
| II-1 | CN | NO₂ | Br | NHCO Z | 2 | H | H | H | / | CH₃ |
| II-2 | CN | NO₂ | Br | NHCO Z | 2 | H | H | H | / | C₂H₅ |
| II-3 | CN | NO₂ | NO₂ | NHCO Z | 2 | H | H | H | / | CH₃ |
| II-4 | CN | NO₂ | NO₂ | NHCO Z | 2 | H | H | H | / | C₂H₅ |
| II-5 | CN | NO₂ | NO₂ | NHCO Z | 3 | H | H | H | / | CH₃ |
| II-6 | CN | NO₂ | NO₂ | NHCO Z | 3 | H | H | H | / | C₂H₅ |
| II-7 | CN | NO₂ | CN | NHCO Z | 2 | H | H | H | / | CH₃ |
| II-8 | CN | NO₂ | CN | NHCO Z | 2 | H | H | H | / | C₂H₅ |
| II-9 | CN | NO₂ | CN | NHCO Z | 3 | H | H | H | / | CH₃ |
| II-10 | CN | NO₂ | CN | NHCO Z | 3 | H | H | H | / | C₂H₅ |
| II-11 | CN | NO₂ | CN | CH₃ | 2 | H | H | H | / | / |
| II-12 | CN | NO₂ | CN | CH₃ | 3 | H | H | H | / | / |
| II-13 | NO₂ | NO₂ | Br | NHCO Z | 2 | H | H | H | / | CH₃ |
| II-14 | NO₂ | NO₂ | Br | NHCO Z | 2 | H | H | H | / | C₂H₅ |
| II-15 | NO₂ | NO₂ | Cl | NHCO Z | 2 | H | H | H | / | CH₃ |
| II-16 | NO₂ | NO₂ | Cl | NHCO Z | 2 | H | H | H | / | C₂H₅ |
| II-17 | NO₂ | NO₂ | Br | NHCO Z | 2 | H | H | OCH₃ | / | C₂H₅ |
| II-18 | NO₂ | NO₂ | Cl | NHCO Z | 2 | H | H | OCH₃ | / | CH₃ |
| II-19 | NO₂ | NO₂ | Br | NHCO Z | 1 | CH=CH₂ | H | OCH₃ | / | CH₃ |
| II-20 | NO₂ | NO₂ | Cl | NHCO Z | 1 | CH=CH₂ | H | OCH₃ | / | CH₃ |
| II-21 | CN | NO₂ | Br | NHCO Z | 2 | COOR²⁵ | COOR ²⁵ | H | CH₃ | CH₃ |
| II-22 | NO₂ | NO₂ | Br | NHCO Z | 2 | COOR²⁵ | COOR ²⁵ | H | CH₃ | CH₃ |
| II-23 | CN | NO₂ | CN | NHCO Z | 2 | COOR²⁵ | COOR²⁵ | H | CH₃ | CH₃ |
| II-24 | NO₂ | NO₂ | H | NHCO Z | 2 | COOR²⁵ | COOR²⁵ | OCH₃ | CH₃ | CH₃ |
| II-25 | NO₂ | NO₂ | Br | NHCO Z | 2 | COOR ²⁵ | COOR²⁵ | OCH₃ | CH₃ | CH₃ |
| II-26 | CN | NO₂ | CN | CH₃ | 2 | COOR ²⁵ | COOR²⁵ | H | CH₃ | CH₃ |

Preferred structures which would be of interest covered by the general formula (III) include for example as given in Table 3

**Table 3**

| Dye | T | U | V | n | R³¹ | R³² | R³³ |
|---|---|---|---|---|---|---|---|
| III-1 | NO₂ | H | NO₂ | 2 | CH₃ | CH₃ | H |
| III-2 . | NO₂ | H | NO₂ | 2 | CH₂CH=CH₂ | CH₂CH=CH₂ | H |
| III-3 | NO₂ | H | NO₂ | 2 | Ph | Ph | H |
| III-4 | NO₂ | H | NO₂ | 2 | CH₂Ph | CH₂Ph | H |
| III-5 | NO₂ | H | NO₂ | 2 | COCH₃ | COCH₃ | H |
| III-6 | NO₂ | H | NO₂ | 2 | COC₂H₅ | COC₂H₅ | H |
| III-7 | NO₂ | H | NO₂ | 2 | CO iso-propyl | CO iso-propyl | H |
| III-8 | NO₂ | H | NO₂ | 2 | CO iso-butyl | CO iso-butyl | H |
| III-9 | NO₂ | H | NO₂ | 2 | COCH₂CH=CH₂ | COCH₂CH=CH₂ | H |
| III-10 | NO₂ | H | NO₂ | 2 | COPh | COPh | H |
| III-11 | NO₂ | H | NO₂ | 2 | COCH₂Ph | COCH₂Ph | H |
| III-12 | NO₂ | H | NO₂ | 2 | COOCH₃ | COOCH₃ | H |
| III-13 | NO₂ | H | NO₂ | 2 | COOC₂H₅ | COOC₂H₅ | H |
| III-14 | NO₂ | H | NO₂ | 2 | COOPh | COOPh | H |
| III-15 | NO₂ | H | NO₂ | 2 | COOCH₂Ph | COOCH₂Ph | H |
| III-16 | NO₂ | H | NO₂ | 2 | CH₃ | CH₃ | CH₃ |
| III-17 | NO₂ | H | NO₂ | 2 | CH₂CH = CH₂ | CH₂CH = CH₂ | CH₃ |
| III-18 | NO₂ | H | NO₂ | 2 | Ph | Ph | CH₃ |
| III-19 | NO₂ | H | NO₂ | 2 | CH₂PH | CH₂Ph | CH₃ |
| III-20 | NO₂ | H | NO₂ | 2 | COCH₃ | COCH₃ | CH₃ |
| III-21 | NO₂ | H | NO₂ | 2 | COC₂H₅ | COC₂H₅ | CH₃ |
| III-22 | NO₂ | H | NO₂ | 2 | CO-iso-propyl | CO-iso-propyl | CH₃ |
| III-23 | NO₂ | H | NO₂ | 2 | CO-iso-butyl | CO-iso-butyl | CH₃ |
| III-24 | NO₂ | H | NO₂ | 2 | COCH₂CH=CH₂ | COCH₂CH = CH₂ | CH₃ |
| III-25 | NO₂ | H | NO₂ | 2 | COPh | COPh | CH₃ |
| III-26 | NO₂ | H | NO₂ | 2 | COCH₂Ph | COCH₂Ph | CH₃ |
| III-27 | NO₂ | H | NO₂ | 2 | COOCH₃ | COOCH₃ | CH₃ |
| III-28 | NO₂ | H | NO₂ | 2 | COOC₂H₅ | COOC₂H₅ | CH₃ |
| III-29 | NO₂ | H | NO₂ | 2 | COOPh | COOPh | CH₃ |
| III-30 | NO₂ | H | NO₂ | 2 | COOCH₂Ph | COOCH,PH | CH₃ |
| III-31 | CN | H | NO₂ | 2 | CH₃ | CH₃ | H |
| III-32 | CN | H | NO₂ | 2 | CH₂CH = CH₂ | CH₂CH = CH₂ | H |
| III-33 | CN | H | NO₂ | 2 | Ph | Ph | H |
| III-34 | CN | H | NO₂ | 2 | CH₂Ph | CH₂Ph | H |
| III-35 | CN | H | NO₂ | 2 | COCH₃ | COCH₃ | H |
| III-36 | CN | H | NO₂ | 2 | COCH₂Ph | COCH₂Ph | H |
| III-37 | CN | H | NO₂ | 2 | COOCH₃ | COOCH₃ | H |
| III-38 | CN | H | NO₂ | 2 | CH₃ | CH₃ | CH₃ |
| III-39 | CN | H | NO₂ | 2 | COCH₃ | COCH₃ | CH₃ |
| III-40 | CN | H | NO₂ | 2 | COOC₂H₅ | COOC₂H₅ | CH₃ |
| III-41 | CN | Cl | CHO | 2 | COCH₃ | COCH₃ | H |

9 Preferred two component mixtures of dyestuffs according to the general formula (I) which would be of interest are for example

| **Compound 1** | **Compound 2** | **Ratio by weight** |
|---|---|---|
| I-1 | I-2 | 50:50 |
| I-1 | I-2 | 60:40 |
| I-1 | I-2 | 40:60 |

Preferred three component mixtures of dyestuffs according to the general formula (I) which would be of interest are for example

| **Compound 1** | **Compound 2** | **Compound 3** | **Ratio by weight** |
|---|---|---|---|
| I-1 | I-2 | I-3 | 45:45:10 |
| I-1 | I-2 | I-3 | 55:35:10 |
| I-1 | I-2 | I-3 | 35:55:10 |
| I-1 | I-2 | I-3 | 40:40:20 |

In two component mixtures with dyes of the general formula (II) or (III), the dyestuff or dyestuff mixture according to the general formula (I) is present in an amount of from 5 to 95 % by weight, preferably of from 70 to 90 % by weight, and the dye, respectively dyes of the general formula (II) or (III) are present in the mixtures in an amount of from 95 to 5 % by weight, preferably of from 15 to 40 % by weight.

Preferred two component mixtures of dyestuffs according to the general formula (I) and (II) or (III) which would be of interest are for example:

| **Dyestuff of formula (I)** | **Dyestuff of formula (II) or (III)** | **Ratio by weight** |
|---|---|---|
| I-1 | II-1 | 75:25 |
| I-1 | II-1 | 80:20 |
| I-1 | II-3 | 75:25 |
| I-1 | II-3 | 80:20 |
| I-1 | II-7 | 75:25 |
| I-1 | II-7 | 80:20 |
| I-1 | II-11 | 75:25 |
| I-1 | II-11 | 80:20 |
| I-1 | II-13 | 75:25 |
| I-1 | II-13 | 80:20 |
| I-1 | II-17 | 75:25 |
| I-1 | II-17 | 80:20 |
| I-1 | II-20 | 75:25 |
| I-1 | II-20 | 80:20 |
| I-1 | II-21 | 75:25 |
| I-1 | II-21 | 80:20 |
| I-1 | II-24 | 75:25 |
| I-1 | II-24 | 80:20 |
| I-1 | III-1 | 75:25 |
| I-1 | III-1 | 80:20 |
| I-1 | III-5 | 75:25 |
| I-1 | III-5 | 80:20 |
| I-1 | III-6 | 75:25 |
| I-1 | III-6 | 80:20 |
| I-1 | III-13 | 75:25 |
| I-1 | III-13 | 80:20 |
| I-2 | II-1 | 75:25 |
| I-2 | II-1 | 80:20 |
| I-2 | II-3 | 75:25 |
| I-2 | II-3 | 80:20 |
| I-2 | II-7 | 75:25 |
| I-2 | II-7 | 80:20 |
| I-2 | II-11 | 75:25 |
| I-2 | II-11 | 80:20 |
| I-2 | II-13 | 75:25 |
| I-2 | II-13 | 80:20 |
| I-2 | II-17 | 75:25 |
| I-2 | II-17 | 80:20 |
| I-2 | II-20 | 75:25 |
| I-2 | II-20 | 80:20 |
| I-2 | II-21 | 75:25 |
| I-2 | II-21 | 80:20 |
| I-2 | II-24 | 75:25 |
| I-2 | II-24 | 80:20 |
| I-2 | III-1 | 75:25 |
| I-2 | III-1 | 80:20 |
| I-2 | III-5 | 75:25 |
| I-2 | III-5 | 80:20 |
| I-2 | III-6 | 75:25 |
| I-2 | III-6 | 80:20 |
| I-2 | III-13 | 75:25 |
| I-2 | III-13 | 80:20 |
| I-1 + I-2 (50:50 ratio) | II-1 | 75:25 |
| I-1 + I-2 (50:50 ratio) | 11-1 | 80:20 |
| I-1 + I-2 (50:50 ratio) | II-3 | 75:25 |
| I-1 + I-2 (50:50 ratio) | II-3 | 80:20 |
| I-1 + I-2 (50:50 ratio) | II-7 | 75:25 |
| I-1 + I-2 (50:50 ratio) | II-7 | 80:20 |
| I-1 + I-2 (50:50 ratio) | II-11 | 75:25 |
| I-1 + I-2 (50:50 ratio) | II-11 | 80:20 |
| I-1 + I-2 (50:50 ratio) | II-13 | 75:25 |
| I-1 + I-2 (50:50 ratio) | II-13 | 80:20 |
| I-1 + I-2 (50:50 ratio) | II-17 | 75:25 |
| I-1 + I-2 (50:50 ratio) | II-17 | 80:20 |
| I-1 + I-2 (50:50 ratio) | II-20 | 75:25 |
| I-1 + I-2 (50:50 ratio) | II-20 | 80:20 |
| I-1 + I-2 (50:50 ratio) | II-21 | 75:25 |
| I-1 + I-2 (50:50 ratio) | II-21 | 80:20 |
| I-1 + I-2 (50:50 ratio) | II-24 | 75:25 |
| I-1 + I-2 (50:50 ratio) | II-24 | 80:20 |
| I-1 + I-2 (50:50 ratio) | III-1 | 75:25 |
| I-1 + I-2 (50:50 ratio) | III-1 | 80:20 |
| I-1 + I-2 (50:50 ratio) | III-5 | 75:25 |
| I-1 + I-2 (50:50 ratio) | 111-5 | 80:20 |
| I-1 + I-2 (50:50 ratio) | III-6 | 75:25 |
| I-1 + I-2 (50:50 ratio) | III-6 | 80:20 |
| I-1 + I-2 (50:50 ratio) | III-13 | 75:25 |
| I-1 + I-2 (50:50 ratio) | III-13 | 80:20 |
| I-1 + I-2 + 1-3 (45:45:10) | II-1 | 75:25 |
| I-1 + I-2 + 1-3 (45:45:10) | II-1 | 80:20 |
| I-1 + I-2 + 1-3 (45:45:10) | II-3 | 80:20 |
| I-1 + I-2 + 1-3 (45:45:10) | II-7 | 80:20 |
| I-1 + I-2 + 1-3 (45:45:10) | II-11 | 80:20 |
| I-1 + I-2 + 1-3 (45:45:10) | II-13 | 80:20 |
| I-1 + I-2 + 1-3 (45:45:10) | II-17 | 80:20 |
| I-1 + I-2 + 1-3 (45:45:10) | II-20 | 80:20 |
| I-1 + I-2 + 1-3 (45:45:10) | II-21 | 80:20 |
| I-1 + I-2 + 1-3 (45:45:10) | II-24 | 80:20 |
| I-1 + I-2 + 1-3 (45:45:10) | III-1 | 80:20 |
| I-1 + I-2 + 1-3 (45:45:10) | III-5 | 80:20 |
| I-1 + I-2 + 1-3 (45:45:10) | III-6 | 80:20 |
| I-1 + I-2 + 1-3 (45:45:10) | III-13 | 80:20 |

In three component mixtures with dyes of the general formula (II) and (111), the dyestuff or dyestuff mixture according to the general formula (I) is present in an amount of from 5 to 95 % by weight, preferably of from 70 to 90 % by weight, the dye, respectively dyes of the general formula (II) are present in the mixtures in an amount of from 5 to 50 % by weight, preferably of from 10 to 20 % by weight and the dye preferably of from 10 to 20 % by weight, respectively dyes of formula (III) are present in the mixtures in an amount of from 5 to 50% by weight, preferably of from 10 to 20 % by weight.

Preferred three component mixtures of dyestuffs according to formula (I) and (II) and (III) which would be of interest are for example:

| **Dyestuff of formula (1)** | **Dyestuff of formula (II)** | **Dyestuff of formula (III)** | **Ratio by weight** |
|---|---|---|---|
| I-1 | II-1 | III-1 | 80:10:10 |
| I-1 | II-1 | III-5 | 80:10:10 |
| I-1 | II-1 | III-6 | 80:10:10 |
| I-1 | II-1 | III-13 | 80:10:10 |
| I-1 | II-3 | III-1 | 80:10:10 |
| I-1 | II-3 | III-5 | 80:10:10 |
| I-1 | II-3 | III-6 | 80:10:10 |
| I-1 | II-3 | III-13 | 80:10:10 |
| I-1 | II-7 | III-1 | 80:10:10 |
| I-1 | II-7 | III-5 | 80:10:10 |
| I-1 | II-7 | III-6 | 80:10:10 |
| I-1 | II-7 | III-13 | 80:10:10 |
| I-1 | II-11 | III-1 | 80:10:10 |
| I-1 | II-11 | III-5 | 80:10:10 |
| I-1 | II-11 | III-6 | 80:10:10 |
| I-1 | II-11 | III-13 | 80:10:10 |
| I-1 | II-13 | III-1 | 80:10:10 |
| I-1 | II-13 | III-5 | 80:10:10 |
| I-1 | II-13 | III-6 | 80:10:10 |
| I-1 | II-13 | III-13 | 80:10:10 |
| I-1 | II-17 | III-1 | 80:10:10 |
| I-1 | II-17 | III-5 | 80:10:10 |
| I-1 | II-17 | III-6 | 80:10:10 |
| I-1 | II-17 | III-13 | 80:10:10 |
| I-1 | II-20 | III-1 | 80:10:10 |
| I-1 | II-20 | III-5 | 80:10:10 |
| I-1 | II-20 | III-6 | 80:10:10 |
| I-1 | II-20 | III-13 | 80:10:10 |
| I-1 | II-21 | III-1 | 80:10:10 |
| I-1 | II-21 | III-5 | 80:10:10 |
| I-1 | II-21 | III-6 | 80:10:10 |
| I-1 | II-21 | III-13 | 80:10:10 |
| I-1 | II-24 | III-1 | 80:10:10 |
| I-1 | II-24 | III-5 | 80:10:10 |
| I-1 | II-24 | III-6 | 80:10:10 |
| I-1 | II-24 | III-13 | 80:10:10 |
| I-2 | II-1 | III-1 | 80:10:10 |
| I-2 | II-1 | III-5 | 80:10:10 |
| I-2 | II-1 | III-6 | 80:10:10 |
| I-2 | II-1 | III-13 | 80:10:10 |
| I-2 | II-3 | III-5 | 80:10:10 |
| I-2 | II-3 | III-6 | 80:10:10 |
| I-2 | II-3 | III-13 | 80:10:10 |
| I-2 | II-7 | III-1 | 80:10:10 |
| I-2 | II-7 | III-5 | 80:10:10 |
| I-2 | II-7 | III-6 | 80:10:10 |
| I-2 | II-7 | III-13 | 80:10:10 |
| I-2 | II-11 | III-1 | 80:10:10 |
| I-2 | II-11 | III-5 | 80:10:10 |
| I-2 | II-11 | III-6 | 80:10:10 |
| I-2 | II-11 | III-13 | 80:10:10 |
| I-2 | II-13 | III-1 | 80:10:10 |
| I-2 | II-13 | III-5 | 80:10:10 |
| I-2 | II-13 | III-6 | 80:10:10 |
| I-2 | II-13 | III-13 | 80:10:10 |
| I-2 | II-17 | III-1 | 80:10:10 |
| I-2 | II-17 | III-5 | 80:10:10 |
| I-2 | II-17 | III-6 | 80:10:10 |
| I-2 | II-17 | III-13 | 80:10:10 |
| I-2 | II-20 | III-1 | 80:10:10 |
| I-2 | II-20 | III-5 | 80:10:10 |
| 1-2 | II-20 | III-6 | 80:10:10 |
| I-2 | II-20 | III-13 | 80:10:10 |
| I-2 | II-21 | III-1 | 80:10:10 |
| I-2 | II-21 | III-5 | 80:10:10 |
| I-2 | II-21 | III-6 | 80:10:10 |
| I-2 | II-21 | III-13 | 80:10:10 |
| I-2 | II-24 | III-1 | 80:10:10 |
| I-2 | II-24 | III-5 | 80:10:10 |
| I-2 | II-24 | III-6 | 80:10:10 |
| I-2 | II-24 | III-13 | 80:10:10 |
| I-1 + I-2 (50:50 ratio) | II-1 | III-1 | 80:10:10 |
| I-1 + I-2 (50:50 ratio) | II-1 | III-5 | 80:10:10 |
| I-1 + I-2 (50:50 ratio) | II-1 | III-6 | 80:10:10 |
| I-1 + I-2 (50:50 ratio) | II-1 | III-13 | 80:10:10 |
| I-1 + I-2 (50:50 ratio) | II-3 | III-5 | 80:10:10 |
| I-1 + I-2 (50:50 ratio) | II-3 | III-6 | 80:10:10 |
| I-1 + I-2 (50:50 ratio) | II-3 | III-13 | 80:10:10 |
| I-1 + I-2 (50:50 ratio) | II-7 | III-1 | 80:10:10 |
| I-1 + I-2 (50:50 ratio) | II-7 | III-5 | 80:10:10 |
| I-1 + I-2 (50:50 ratio) | II-7 | III-6 | 80:10:10 |
| I-1 + I-2 (50:50 ratio) | II-7 | III-13 | 80:10:10 |
| I-1 + I-2 (50:50 ratio) | II-11 | III-1 | 80:10:10 |
| I-1 + I-2 (50:50 ratio) | II-11 | III-5 | 80:10:10 |
| I-1 + I-2 (50:50 ratio) | II-11 | III-6 | 80:10:10 |
| I-1 + I-2 (50:50 ratio) | II-11 | III-13 | 80:10:10 |
| I-1 + I-2 (50:50 ratio) | II-13 | III-1 | 80:10:10 |
| I-1 + I-2 (50:50 ratio) | II-13 | III-5 | 80:10:10 |
| I-1 + I-2 (50:50 ratio) | II-13 | III-6 | 80:10:10 |
| I-1 + I-2 (50:50 ratio) | II-13 | III-13 | 80:10:10 |
| I-1 + I-2 (50:50 ratio) | II-17 | III-1 | 80:10:10 |
| I-1 + I-2 (50:50 ratio) | II-17 | III-5 | 80:10:10 |
| I-1 + I-2 (50:50 ratio) | II-17 | III-6 | 80:10:10 |
| I-1 + I-2 (50:50 ratio) | II-17 | III-13 | 80:10:10 |
| I-1 + I-2 (50:50 ratio) | II-20 | III-1 | 80:10:10 |
| I-1 + I-2 (50:50 ratio) | II-20 | III-5 | 80:10:10 |
| I-1 + I-2 (50:50 ratio) | II-20 | III-6 | 80:10:10 |
| I-1 + I-2 (50:50 ratio) | II-20 | III-13 | 80:10:10 |
| I-1 + I-2 (50:50 ratio) | II-21 | III-1 | 80:10:10 |
| I-1 + I-2 (50:50 ratio) | II-21 | III-5 | 80:10:10 |
| I-1 + I-2 (50:50 ratio) | II-21 | III-6 | 80:10:10 |
| I-1 + I-2 (50:50 ratio) | II-21 | III-13 | 80:10:10 |
| I-1 + I-2 (50:50 ratio) | II-24 | III-1 | 80:10:10 |
| I-1 + I-2 (50:50 ratio) | II-24 | III-5 | 80:10:10 |
| I-1 + I-2 (50:50 ratio) | II-24 | III-6 | 80:10:10 |
| I-1 + I-2 (50:50 ratio) | II-24 | III-13 | 80:10:10 |

The dyes according to the general formula (I) are known from EP 363 034 A2, mixtures of benzodifuranone dyes are known from WO 9704031.

Dyestuff mixtures comprising benzodifuranone derivatives suitable to dye polyester materials are described in JP,A,7,062260, EP,A,551725, EP,A,640667, WO,A,01/94314.

Mixtures embodying the invention can be prepared, for example, by mixing the dye components in the required amounts. Suitable mixing methods include

### Co-crystallisation

Typically, the dyes are dissolved in a hot solvent, for example, by placing the dyes in a suitable solvent and heating up to the reflux temperature of the solvent until the dyes are dissolved, thereafter filtering to provide a solution, and then allowing the solution to cool and crystals to form. The resultant mixture may then undergo further processing, such as milling and spray drying. Examples of suitable solvents for this process are organic solvents such as aromatic hydrocarbons, chlorinated hydrocarbons, aliphatic hydrocarbons, alicyclic hydrocarbons, alcohols, amides, sulphoxides, esters, ketones and ethers. Specific examples of organic solvents are toluene, ethyl cellosolve, acetone, chlorobenzene, pyridine, dimethyl formamide, dimethylsulphoxide, ethyl acetate, benzene, tetrahydrofuran and cyclohexane. Co-crystallisation is generally unsuitable for mixtures containing more than two components.

### Co-milling

The dyes are mixed and then milled together to give an intimate blend which is then spray dried to give a solid mixture; or

### Co-drying

each dye is milled separately and then mixed in the required ratio before spray drying.

### Dry-Blending

Each dye is spray dried separately and then mixed in the required ratio by a dry blending process.

Mixtures embodying the invention provide especially useful disperse dyes valuable for colouring synthetic textile materials and fibre blends thereof by exhaust dyeing, padding or printing, and may be formed into dispersions for this purpose. They may also be used in, for example dye diffusion, thermal transfer printing and in the colouration of plastics.

A particular aspect of the invention provides a composition comprising a mixture of dyestuffs of the general formula (I), optionally dyestuffs of the general formula (II) and optionally dyestuffs of the general formula (III), and additionally, at least one further ingredient conventionally used in colouring applications such as a dispersing agent and optionally a surfactant or wetting agent. The composition typically comprises from 1 % to 65%, preferably 10 to 60%, more preferably 20 to 55%, of the
total dye mixture in a solid medium.

Typical examples of dispersing agent are lignosulphonates, naphthalene sulphonic acid/formaldehyde condensates and phenol/cresol/sulphanilic acid/formaldehyde condensates, typical examples of wetting agent are alkyl aryl ethoxylates which may be sulphonated or phosphated and typical example of other ingredients which may be present are inorganic salts, de-foamers such as mineral oil or nonanol, organic liquids and buffers. Dispersing agents may be present at from 10% to 200% on the weight of the dye mixtures. Wetting agents may be used at from 0% to 20% on the weight of the dye mixtures.

The compositions may be prepared by bead milling the dye mixture with glass beads or sand in an aqueous medium. The compositions may have further additions of dispersing agents, fillers and other surfactants and may be dried, by a technique such as spray drying, to give a solid composition comprising from 5% to 65% of dyestuff.

According to another aspect, the invention provides a process for colouring a synthetic textile material or fibre blend thereof which comprises applying to the synthetic textile material or fibre blend the dyestuff mixture according to the invention.

The synthetic textile material may be selected from aromatic polyester, especially polyethylene terephthalate, polyamide, especially polyhexamethylene adipamide, secondary cellulose acetate, cellulose triacetate, and natural textile materials, especially cellulosic materials and wool. An especially preferred textile material is an aromatic polyester or fibre blend thereof with fibres of any of the above mentioned textile materials. Especially preferred fibre blends include those of polyester-cellulose, such as polyester-cotton, and polyester-wool. The textile materials or blends thereof may be in the form of filaments, loose fibres, yarn or woven or knitted fabrics.

The inventive dyestuff mixtures may be applied to the synthetic textile materials or fibre blends by processes which are conventionally employed in applying disperse dyes to such materials and fibre blends.

Suitable process conditions may be selected from the following
(i) exhaust dyeing at a pH of from 4 to 6.5, at a temperature of from 125°C to 140°C for from 10 to 120 minutes and under a pressure of from 1 to 2 bar, a sequestrant optionally being added;
(ii) continuous dyeing at a pH of from 4 to 6.5, at a temperature of from 190°C to 225°C for from 1 5 seconds to 5 minutes, a migration inhibitor optionally being added;
(iii) direct printing at a pH of from 4 to 6.5, at a temperature of from 160°C to 185°C for from 4 to 15 minutes for high temperature steaming, or at a temperature of from 190°C to 225°C for from 15 seconds to 5 minutes for bake fixation with dry heat or at a temperature of from 120°C to 140°C and 1 to 2 bar for from 10 to 45 minutes for pressure steaming, wetting agents and thickeners (such as alginates) of from 5 to 100% by weight of the dye optionally being added;
(iv) discharge printing (by padding the dye on to the textile material, drying and overprinting) at a pH of from 4 to 6.5, migration inhibitors and thickeners optionally being added;
(v) carrier dyeing at a pH of from 4 to 6.5, at a temperature of from 95°C to 100°C using a carrier such as methylnaphthalene, diphenylamine or 2-phenylphenol, sequestrants optionally being added; and
(vi) atmospheric dyeing of acetate, triacetate and nylon at a pH of from 4 to 6.5, at a temperature of 85°C for acetate or at a temperature of 90°C for triacetate and nylon for from 1 5 to 90 minutes, sequestrants optionally being added.

In all the above processes, the dye mixture is applied as a dispersion comprising from 0.001 % to 20%, preferably from 0.005 to 16%, of the dye mixture in an aqueous medium.

The dye mixtures may also be applied to textile materials using supercritical carbon dioxide, in which case the dye formulating agents may optionally be omitted.

Embodiments of the present invention will now be described in more detail with reference to the following examples, in which parts are by weight unless otherwise stated.

### Example 1

A 50:50 mixture of dyestuff I-1 and dyestuff I-2 can be prepared by reacting equimolecular proportions of 2-methyl aniline and 2-ethyl aniline with a BDT intermediate. The isolated colour is an intimate mixture of the two components in approximately equal proportions and this can be verified by analysis. 20.3 parts of this mixture can then be mixed with 5 parts of a dye of dyestuff III-1 and milled as a 40% aqueous slurry with 15 parts of a high temperature stable dispersing agent until the dye particle size (mean diameter) was in the range 0.1 - 5 microns.

This dispersion was standardised to a solid brand containing 50% of the mixture and 50% dispersing agent, by the addition of 10 parts of a 'filler'/'cutting' agent and drying to either a grain or powder form in a spray dryer. This product is especially suitable for the exhaust dyeing of polyester(including microfibre and weight reduced polyester), polyester/cellulose polyester/elastane, polyester/nylon especially conjugate microfibre) and polyester/wool blends and can also be used for continuous dyeing and direct printing.

A dye bath for the exhaust dyeing of polyester in piece form was prepared by adding 7.5 ml of an aqueous dispersion of the solid brand (1g dye in 100 ml water at 40-50°C) to 57 ml of de-ionised water and 1.2 ml of buffer solution. To this dye bath was added a 5g piece of polyester and the whole was held for 45 minutes at 130°C in a Werner Mathis Labomat high temperature dyeing machine. After rinsing with water and a reduction clearing treatment, the material was dyed a navy blue shade with excellent wet fastness. An interesting feature of the mixture is its excellent build-up performance on polyester and especially polyester micro fibre, where proportionately more dye has to be applied to obtain the same visual yield compared with conventional polyester.

### Example 2

A 50:50 mixture of dyestuff I-1 and dyestuff I-2 can be prepared by reacting equimolecular proportions of 2-methyl aniline and 2-ethyl aniline with a BDT intermediate. The isolated colour is an intimate mixture of the two components in approximately equal proportions and this can be verified by analysis. 24 parts of this mixture can then be milled as a 40% aqueous slurry with 13 parts of a high temperature stable dispersing agent until the dye particle size (mean diameter) was in the range 0.1 - 5 microns.

This dispersion was standardised to a solid brand containing 50% of the mixture and 50% dispersing agent, by the addition of 13 parts of a 'filler'/'cutting' agent and drying to either a grain or powder form in a spray dryer. This product is especially suitable for the exhaust dyeing of polyester (including microfibre and weight reduced polyester), polyester/cellulose polyester/elastane, polyester/nylon especially conjugate microfibre) and polyester/wool blends and can also be used for continuous dyeing and direct printing.

A dye bath for the exhaust dyeing of polyester in piece form was prepared by adding 7 ml of an aqueous dispersion of the solid brand (1 g dye in 100 ml water at 40-50°C) to 57 ml of de-ionised water and 1.2 ml of buffer solution. To this dye bath was added a 5 g piece of polyester and the whole was held for 45 minutes at 130°C in a Werner Mathis Labomat high temperature dyeing machine. After rinsing with water and a reduction clearing treatment, the material was dyed a navy blue shade with excellent wet fastness. An interesting feature of the mixture is its excellent build-up performance on polyester and especially polyester microfibre, where proportionately more dye has to be applied to obtain the same visual yield compared with conventional polyester.

### Example 3

A mixture of 24.4 parts of dyestuff I-1 and 6 parts of dyestuff III-1 was prepared by mixing the two dyes together and milling them as a 40% aqueous slurry with 18 parts of a high temperature stable dispersing agent until the dye particle size (mean diameter) was in the range 0.1 - 5 microns.

This dispersion was standardised to a solid brand containing 50 % of the mixture and 50 % dispersing agent, 12 parts of 'filler'/'cutting' agent and drying to either a grain or powder form in a spray dryer. This product is especially suitable for the exhaust dyeing of polyester (including microfibre and weight reduced polyester), polyester/cellulose polyester/elastane, polyester/nylon (especially conjugate microfibre) and polyester/wool blends and can also be used for continuous dyeing and direct printing.

A dyebath for the exhaust dyeing of polyester in piece form was prepared by adding 7.5 ml of an aqueous dispersion of the solid brand (1 g dye in 100 ml water at 40-50°C) to 57.5 ml of de-ionised water and 1.2 ml of buffer solution.

To this dye bath was added a 5g piece of polyester and the whole was held for 45 minutes at 130°C in a Werner Mathis Labomat high temperature dyeing machine. After rinsing with water and a reduction clearing treatment, the material was dyed a navy blue shade with excellent wet fastness. An interesting feature of the mixture is its excellent build-up performance on polyester and especially polyester microfibre, where proportionately more dye has to be applied to obtain the same visual yield compared with conventional polyester.

### Example 4

A mixture of 20.3 parts of dyestuff I-2 and 5 parts of dyestuff III-1 was prepared by mixing the two dyes together and milling them as a 40% aqueous slurry with 1 5 parts of a high temperature stable dispersing agent until the dye particle size (mean diameter) was in the range 0.1 - 5 microns.

This dispersion was standardised to a solid brand containing 50 % of the mixture and 50 % dispersing agent, 10 parts of `filler'/'cutting' agent and drying to either a grain or powder form in a spray dryer. This product is especially suitable for the exhaust dyeing of polyester (including microfibre and weight reduced polyester), polyester/cellulose polyester/elastane, polyester/nylon (especially conjugate microfibre) and polyester/wool blends and can also be used for continuous dyeing and direct printing.

A dyebath for the exhaust dyeing of polyester in piece form was prepared by adding 7.5 mls of an aqueous dispersion of the solid brand (1 g dye in 100 ml water at 40-50°C) to 57.5 ml of deionised water and 1.2 ml of buffer solution. To this dyebath was added a 5g piece of polyester and the whole was held for 45 minutes at 130°C in a Werner Mathis Labomat high temperature dyeing machine. After rinsing with water and a reduction clearing treatment, the material was dyed a navy blue shade with excellent wet fastness. An interesting feature of the mixture is its excellent build-up performance on polyester and especially polyester microfibre, where proportionately more dye has to be applied to obtain the same visual yield compared with conventional polyester.

### Example 5

A mixture of 24.4 parts of dyestuff I-3 and 6 parts of dyestuff III-1 was prepared by mixing the two dyes together and milling them as a 40% aqueous slurry with 18 parts of a high temperature stable dispersing agent until the dye particle size (mean diameter) was in the range 0.1 - 5 microns.

This dispersion was standardised to a solid brand containing 50 % of the mixture and 50 % dispersing agent, 12 parts of 'filler'/'cutting' agent and drying to either a grain or powder form in a spray dryer. This product is especially suitable for the exhaust dyeing of polyester (including microfibre and weight reduced polyester), polyester/cellulose polyester/elastane, polyester/nylon (especially conjugate microfibre) and polyester/wool blends and can also be used for continuous dyeing and direct printing.

A dye bath for the exhaust dyeing of polyester in piece form was prepared by adding 7.5 ml of an aqueous dispersion of the solid brand (1g dye in 100 ml water at 40-50°C) to 57.5 ml of de-ionised water and 1.2 ml of buffer solution. To this dye bath was added a 5g piece of polyester and the whole was held for 45 minutes at 130°C in a Werner Mathis Labomat high temperature dyeing machine. After rinsing with water and a reduction clearing treatment, the material was dyed a navy blue shade with excellent wet fastness. An interesting feature of the mixture is its excellent build-up performance on polyester and especially polyester microfibre, where proportionately more dye has to be applied to obtain the same visual yield compared with conventional polyester.

### Example 6

A 3 component mixture of dyestuff I-1, dyestuff I-2 and dyestuff I-3 can be prepared by reacting of 2-methyl aniline, 2-ethyl aniline and 2:6 dimethyl aniline in the molecular proportions of 45:45:10 with a BDT intermediate.

The isolated colour is an intimate mixture of the three components in approximately the desired ratio and this can be verified by analysis. 16.2 parts of this mixture can then be mixed with 4 parts of dyestuff III-1 and milled as a 40% aqueous slurry with 12 parts of a high temperature stable dispersing agent until the dye particle size (mean diameter) was in the range 0.1 - 5 microns.

This dispersion was standardised to a solid brand containing 50% of the mixture and 50% dispersing agent, by the addition of 8 parts of a 'filler'/'cutting' agent and drying to either a grain or powder form in a spray dryer. This product is especially suitable for the exhaust dyeing of polyester(including microfibre and weight reduced polyester), polyester/cellulose polyester/elastane, polyester/nylon especially conjugate microfibre) and polyester/wool blends and can also be used for continuous dyeing and direct printing.

A dye bath for the exhaust dyeing of polyester in piece form was prepared by adding 7.5 ml of an aqueous dispersion of the solid brand (1g dye in 100 ml water at 40-50°C) to 57 ml of de-ionised water and 1.2 ml of buffer solution. To this dye bath was added a 5g piece of polyester and the whole was held for 45 minutes at 130°C in a Werner Mathis Labomat high temperature dyeing machine. After rinsing with water and a reduction clearing treatment, the material was dyed a navy blue shade with excellent wet fastness. An interesting feature of the mixture is its excellent build-up performance on polyester and especially polyester microfibre, where proportionately more dye has to be applied to obtain the same visual yield compared with conventional polyester.

### Example 7

A 3 component mixture of dyestuff I-1, dyestuff I-2 and I-3 can be prepared by reacting of 2-methyl aniline, 2-ethyl aniline and 2,6 dimethylaniline in the molecular proportions of 45:45:10 with a BDT intermediate.

The isolated colour is an intimate mixture of the three components in approximately the desired ratio and this can be verified by analysis. 20.2 parts of this mixture can then be milled as a 40% aqueous slurry with 12 parts of a high temperature stable dispersing agent until the dye particle size (mean diameter) was in the range 0.1 - 5 microns.

This dispersion was standardised to a solid brand containing 50% of the mixture and 50% dispersing agent, by the addition of 8 parts of a 'filler'/'cutting' agent and drying to either a grain or powder form in a spray dryer. This product is especially suitable for the exhaust dyeing of polyester(including microfibre and weight reduced polyester), polyester/cellulose polyester/elastane, polyester/nylon especially conjugate microfibre) and polyester/wool blends and can also be used for continuous dyeing and direct printing.

A dye bath for the exhaust dyeing of polyester in piece form was prepared by adding 7 ml of an aqueous dispersion of the solid brand (1 g dye in 100 ml water at 40-50°C) to 57 ml of deionised water and 1.2 ml of buffer solution. To this dye bath was added a 5g piece of polyester and the whole was held for 45 minutes at 130°C in a Werner Mathis Labomat high temperature dyeing machine. After rinsing with water and a reduction clearing treatment, the material was dyed a navy blue shade with excellent wet fastness. An interesting feature of the mixture is its excellent build-up performance on polyester and especially polyester microfibre, where proportionately more dye has to be applied to obtain the same visual yield compared with conventional polyester.

Further dye mixtures based on 1, 2 and 3 components of general structure I can be used in admixture with dyes of general structure II or III and applied to polyester under the exhaust dyeing conditions described in Examples 1-7 above. Again after the normal clearing treatments, the dyeings obtained were blue in shade and had good/excellent build-up properties to yield navy shades with excellent wet fastness. All the mixtures evaluated exhibited good build-up performance on polyester and especially polyester microfibre, where proportionately more dye has to be applied to obtain the same visual yield compared with conventional polyester.

## Claims

1. Dye mixtures comprising one or more dyes of the herein below indicated and defined formula (I) 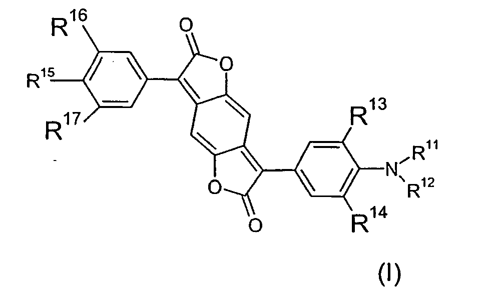 where
R¹¹ and R¹² are independently hydrogen, optionally substituted alkyl, alkenyl, cycloalkyl, aryl or aralkyl, or R¹¹ and R¹² together with the N atom can form a heterocyclic 5, 6 or 7 membered ring,
R¹³ and R¹⁴ are independently hydrogen, halogen, or an optionally substituted alkyl, alkenyl or alkoxy or R¹¹ and R¹³ together with the N atom can form a heterocyclic 5, 6 or 7 membered ring,
R¹² and R¹⁴ together with the N atom can form a heterocyclic 5, 6 or 7 membered ring,
R¹⁵ is hydrogen, halogen or optionally substituted alkyl or alkoxy group or - NR¹¹R¹² where R¹¹ and R¹² are as defined above
R¹⁶ and R¹⁷ are independently hydrogen, halogen, or an optionally substituted alkyl, alkenyl or alkoxy,
R¹⁵ and R¹⁶ together with the N atom can form a heterocyclic 5,6 or 7 membered ring, or
R¹⁵ and R¹⁷ together with the N atom can form a heterocyclic 5,6 or 7 membered ring
and optionally one or more, such as two or three, preferably 1 or 2, dyes of the herein below indicated and defined general formula (II) 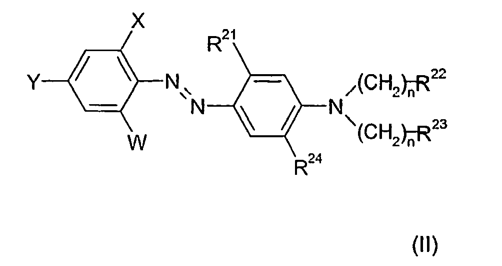 wherein
X and W are hydrogen, chlorine, bromine, iodine, nitro or nitrile
Y is nitro or cyano
R²¹ is hydrogen, C₁ to C₄ alkyl, C₁ to C₄ alkoxy or NHCOZ where Z is hydrogen, C₁ to C₄ alkyl, amino, C₁ to C₄ alkoxy, aryl, aryloxy, aralkyl or aralkyloxy.
R²² is hydrogen, cyano, alkoxycarbonyl of formula (a), 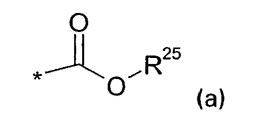
or is alkoxycarbonyloxy of formula (b) 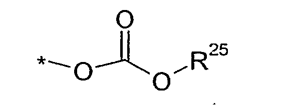 wherein
R²⁵ is C₁ to C₄ alkyl, aryl or aralkyl
R²³ has one of the meanings of R²²
n is an integer of 2 to 4
R²⁴ is hydrogen, C₁ to C₄ alkyl or C₁ to C₄ alkoxy
and optionally one or more, such as two or three, preferably 1 or 2, dyes of the herein below indicated and defined general formula (III) 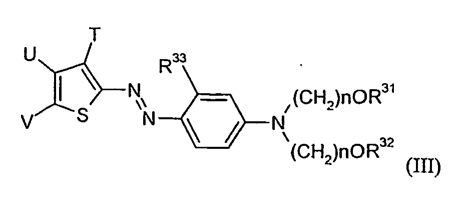 wherein
T, U and V are independently hydrogen, formyl, acetyl, chloro, bromo, cyano or nitro
R³¹ and R³² are independently C₁ to C₄ alkyl, alkenyl, aryl, aralkyl, carbonylalkyl, carbonylalkenyl, carbonylaryl, carbonylalkoxyalkyl or carbonyl- aryloxyalkyl.
R³³ is hydrogen, halogen, C₁ to C₄ alkyl or C₁ to C₄ alkoxy, NHCOR³⁴, where
R³⁴ is C₁ to C₄ alkyl or C₁ to C₄ alkoxy.

2. Dyestuff mixture according to claim 1 comprising one or more dyes of the general formula (I) and one or more dyes of the general formula (II).

3. Dyestuff mixture according to claim 1 comprising one or more dyes of the general formula (I) and one or more dyes of the general formula (III).

4. Dyestuff mixture according to claim 1 comprising one or more dyes of the general formula (I), one or more dyes of the general formula (II) and one or more dyes of the general formula (III).

5. Dyestuff mixture according to claim 1 where in case that R³³ is NHCOR³⁴
then (CH₂)ₙOR¹/R² are replaced by R³⁵ and R³⁶ as given in structure (IIIa) 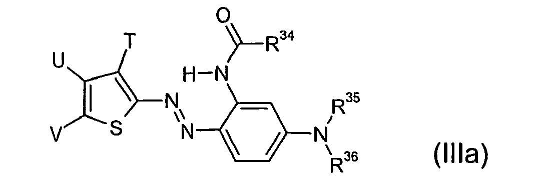 wherein
R³⁵ and R³⁶ are independently hydrogen, alkyl, alkenyl, aryl, aralkyl, alkoxyalkyl, aryloxyalkyl, alkoxycarbonylalkyl and alkylcarbonylalkoxy.

6. A dye mixture according to at least one of claims 1 to 5 wherein the ratio by weight of dye or dyes according to the general formula (I) to dye or dyes according to the general formula (II) or (III) is from 95- 5% (I) to 5-95% (II) or (III).

7. A dye mixture according to at least one of claims 1 to 6 wherein the ratio by weight of dye or dyes according to the general formula (I) to dye or dyes according to the general formula (II) or (III) is from 95- 50% (I) to 5-50% (II) or (III).

8. A dye mixture according to at least one of claims 1 to 7 claim wherein the ratio by weight of dye or dyes according to the general formula (I) to dye or dyes according to the general formula (II) or (III) is from 85- 60% (I) to 15-40% (II) or (III).

9. A dye mixture according to claim 1 wherein the ratio by weight of dye or dyes according to the general formula (I) to dye or dyes according to the general formula (II) to dyes or dyes according to the general formula (III) is from 5- 95% (I) 5 to 50% (II) to 5-50% (III).

10. A dye mixture according to claim 1 wherein the ratio by weight of dye or
dyes according to the general formula (I) to dye or dyes according to the general formula (II) to dyes or dyes according to the general formula (III) is from 70-90% (I), 10-20% (II), to 10-20% (III).

11. Process for the preparation of a dye mixture according to one or more of claims 1 to 9 comprising mixing the dye components in the required amounts.

12. A composition comprising a dye mixture according to one or more of claims 1 to 9 and at least one dispersing agent, surfactant or wetting agent.

13. A process for colouring a synthetic textile material or fibre blend thereof, which comprises applying thereto a dye mixture according to one or more of claims 1 to 9.

14. A process according to claim 12, wherein the synthetic material or fibre blend thereof is a polyester or polyester-cellulose or polyester-wool blend.

## Patentansprüche

1. Farbstoffmischungen, die einen oder mehrere der Farbstoffe mit der nachstehend angegebenen und definierten Formel (I) 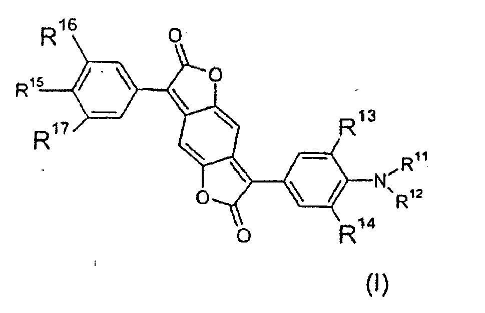 wobei
R¹¹ und R¹² unabhängig voneinander für Wasserstoff, gegebenenfalls substituiertes Alkyl, Alkenyl, Cycloalkyl, Aryl oder Aralkyl stehen oder R¹¹ und R¹² zusammen mit dem N-Atom einen heterocyclischen 5-, 6- oder 7-gliedrigen Ring bilden können,
R¹³ und R¹⁴ unabhängig voneinander für Wasserstoff, Halogen oder ein gegebenenfalls substituiertes Alkyl, Alkenyl oder Alkoxy stehen oder R¹¹ und R¹³ zusammen mit dem N-Atom einen heterocyclischen 5-, 6- oder 7-gliedrigen Ring bilden können,
R¹² und R¹⁴ zusammen mit dem N-Atom einen heterocyclischen 5-, 6- oder 7-gliedrigen Ring bilden können,
R¹⁵ für Wasserstoff, Halogen oder gegebenenfalls substituierte Alkyl- oder Alkoxygruppe oder -NR¹¹R¹² stehen, wobei R¹¹ und R¹² die oben genannte Bedeutung haben,
R¹⁶ und R¹⁷ unabhängig voneinander für Wasserstoff, Halogen oder ein gegebenenfalls substituiertes Alkyl, Alkenyl oder Alkoxy stehen,
R¹⁵ und R¹⁶ zusammen mit dem N-Atom einen heterocyclischen 5-, 6- oder 7-gliedrigen Ring bilden können oder
R¹⁵ und R¹⁷ zusammen mit dem N-Atom einen heterocyclischen 5-, 6- oder 7-gliedrigen Ring bilden können,
und gegebenenfalls einen oder mehrere, wie zwei oder drei, bevorzugt 1 oder 2, der Farbstoffe mit der nachstehend angegebenen und definierten allgemeinen Formel (II) 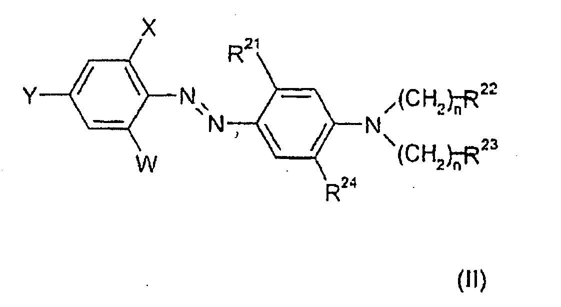 wobei
X und W für Wasserstoff, Chlor, Brom, Iod, Nitro oder Nitril stehen,
Y für Nitro oder Cyano steht,
R²¹ für Wasserstoff, C₁- bis C₄-Alkyl, C₁- bis C₄- Alkoxy oder NHCOZ steht, wobei Z für Wasserstoff, C₁- bis C₄-Alkyl, Amino, C₁- bis C₄-Alkoxy, Aryl, Aryloxy, Aralkyl oder Aralkyloxy steht,
R²² für Wasserstoff, Cyano, Alkoxycarbonyl der Formel (a) 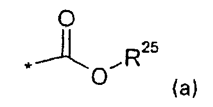
oder für Alkoxycarbonyloxy der Formel (b) 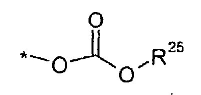 steht, wobei R²⁵ für C₁- bis C₄-Alkyl, Aryl oder Aralkyl steht,
R²³ eine der Bedeutungen von R²² hat,
n eine ganze Zahl von 2 bis 4 ist
R²⁴ für Wasserstoff, C₁- bis C₄-Alkyl oder C₁- bis C₄-Alkoxy steht,
und gegebenenfalls einen oder mehrere, wie zwei oder drei, bevorzugt 1 oder 2, der Farbstoffe mit der nachstehend angegebenen und definierten allgemeinen Formel (III) 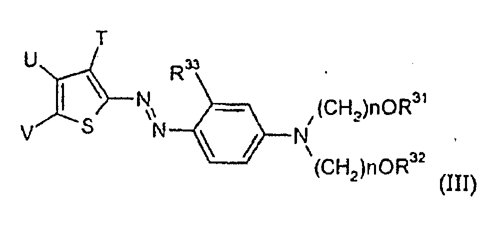 wobei
T, U und V unabhängig voneinander für Wasserstoff, Formyl, Acetyl, Chloro, Bromo, Cyano oder Nitro stehen,
R³¹ und R³² unabhängig voneinander für C₁- bis C₄-Alkyl, Alkenyl, Aryl, Aralkyl, Carbonylalkyl, Carbonylalkenyl, Carbonylaryl, Carbonylalkoxyalkyl oder Carbonylaryloxyalkyl stehen,
R³³ für Wasserstoff, Halogen, C₁- bis C₄-Alkyl, oder C₁- bis C₄-Alkoxy, NHCOR³⁴ steht, wobei
R³⁴ für C₁- bis C₄-Alkyl oder C₁- bis C₄-Alkoxy steht,
enthalten.

2. Farbstoffmischung nach Anspruch 1, die einen oder mehrere der Farbstoffe gemäß der allgemeinen Formel (I) und einen oder mehrere der Farbstoffe gemäß der allgemeinen Formel (II) enthält.

3. Farbstoffmischung nach Anspruch 1, die einen oder mehrere der Farbstoffe gemäß der allgemeinen Formel (I) und einen oder mehrere der Farbstoffe gemäß der allgemeinen Formel (III) enthält.

4. Farbstoffmischung nach Anspruch 1, die einen oder mehrere der Farbstoffe gemäß der allgemeinen Formel (I), einen oder mehrere der Farbstoffe gemäß der allgemeinen Formel (II) und einen oder mehrere der Farbstoffe gemäß der allgemeinen Formel (III) enthält.

5. Farbstoffmischung nach Anspruch 1, bei der im Falle von R³³ gleich NHCOR³⁴ (CH₂)ₙOR¹/R² durch R³⁵ und R³⁶ gemäß Struktur (IIIa) 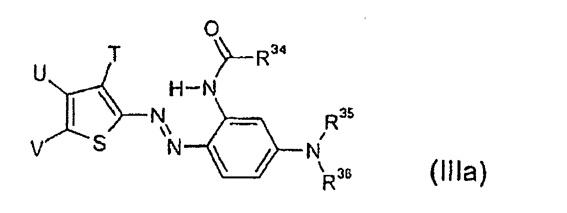 wobei
R³⁵ und R³⁶ unabhängig voneinander für Wasserstoff, Alkyl, Alkenyl, Aryl, Aralkyl, Alkoxyalkyl, Aryloxyalkyl, Alkoxycarbonylalkyl und Alkylcarbonylalkoxy,
ersetzt werden.

6. Farbstoffmischung nach mindestens einem der Ansprüche 1 bis 5, bei der das Gewichtsverhältnis von Farbstoff oder Farbstoffen gemäß der allgemeinen Formel (I) zu Farbstoff oder Farbstoffen gemäß der allgemeinen Formel (II) oder (III) 95 bis 5% (I) zu 5 bis 95% (II) oder (III) beträgt.

7. Farbstoffmischung nach mindestens einem der Ansprüche 1 bis 6, bei der das Gewichtsverhältnis von Farbstoff oder Farbstoffen gemäß der allgemeinen Formel (I) zu Farbstoff oder Farbstoffen gemäß der allgemeinen Formel (II) oder (III) 95 bis 50% (I) zu 5 bis 50% (II) oder (III) beträgt.

8. Farbstoffmischung nach mindestens einem der Ansprüche 1 bis 7, bei der das Gewichtsverhältnis von Farbstoff oder Farbstoffen gemäß der allgemeinen Formel (I) zu Farbstoff oder Farbstoffen gemäß der allgemeinen Formel (II) oder (III) 85 bis 60% (I) zu 15 bis 40% (II) oder (III) beträgt.

9. Farbstoffmischung nach Anspruch 1, bei der das Gewichtsverhältnis von Farbstoff oder Farbstoffen gemäß der allgemeinen Formel (I) zu Farbstoff oder Farbstoffen gemäß der allgemeinen Formel (II) zu Farbstoff oder Farbstoffen gemäß der allgemeinen Formel (III) 5 bis 95% (I) zu 5 bis 50% (II) zu 5 bis 50% (III) beträgt.

10. Farbstoffmischung nach Anspruch 1, bei der das Gewichtsverhältnis von Farbstoff oder Farbstoffen gemäß der allgemeinen Formel (I) zu Farbstoff oder Farbstoffen gemäß der allgemeinen Formel (II) zu Farbstoff oder Farbstoffen gemäß der allgemeinen Formel (III) 70 bis 90% (I) zu 10 bis 20% (II) zu 10 bis 20% (III) beträgt.

11. Verfahren zur Herstellung einer Farbstoffmischung gemäß einem oder mehreren der Ansprüche 1 bis 9, bei dem man die Farbstoffkomponenten in den erforderlichen Mengen mischt.

12. Zusammensetzung, enthaltend eine Farbstoffmischung gemäß einem oder mehreren der Ansprüche 1 bis 9 und mindestens ein Dispergier-, oberflächenaktives oder Netzmittel.

13. Verfahren zum Kolorieren eines synthetischen Textilmaterials oder eines Fasergemischs daraus, bei dem man darauf eine Farbstoffmischung gemäß einem oder mehreren der Ansprüche 1 bis 9 aufbringt.

14. Verfahren nach Anspruch 12, bei dem man als synthetisches Material oder Fasergemisch daraus einen Polyester bzw. ein Polyester/Cellulose- oder Polyester/Woll-Gemisch einsetzt.

## Revendications

1. Mélanges de colorants comprenant un ou plusieurs colorants représentés par la formule (I) représentée et définie ci-dessous 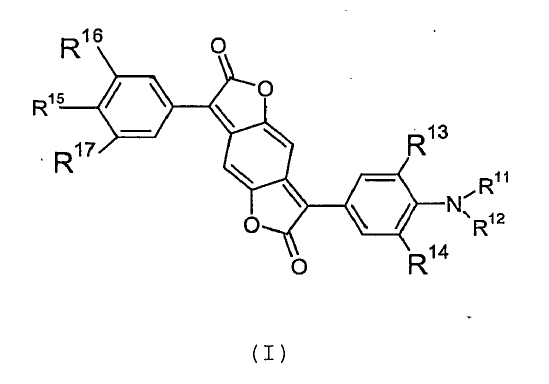 où
R¹¹ et R¹² sont indépendamment un hydrogène, un alkyle, alcényle, cycloalkyle, aryle ou aralkyle facultativement substitué ou R¹¹ et R¹² conjointement avec l'atome de N peuvent former un cycle hétérocyclique à 5, 6 ou 7 chaînons,
R¹³ et R¹⁴ sont indépendamment un hydrogène, un halogène ou un alkyle, alcényle ou alcoxy facultativement substitué ou R¹¹ et R¹³ conjointement avec l'atome de N peuvent former un cycle hétérocyclique à 5, 6 ou 7 chaînons,
R¹² et R¹⁴ conjointement avec l'atome de N peuvent former un cycle hétérocyclique à 5, 6 ou 7 chaînons,
R¹⁵ est un hydrogène, un halogène ou un groupe alkyle ou alcoxy facultativement substitué ou -NR¹¹R¹² où R¹¹/R¹² sont tels que définis ci-dessus
R¹⁶ et R¹⁷ sont indépendamment un hydrogène, un halogène ou un alkyle, alcényle ou alcoxy facultativement substitué,
R¹⁵ et R¹⁶ conjointement avec l'atome de N peuvent former un cycle hétérocyclique à 5, 6 ou 7 chaînons ou
R¹⁵ et R¹⁷ conjointement avec l'atome de N peuvent former un cycle hétérocyclique à 5, 6 ou 7 chaînons,
et facultativement un ou plusieurs, par exemple deux ou trois, de préférence 1 ou 2, colorants représentés par la formule générale (II) représentée et définie ci-dessous 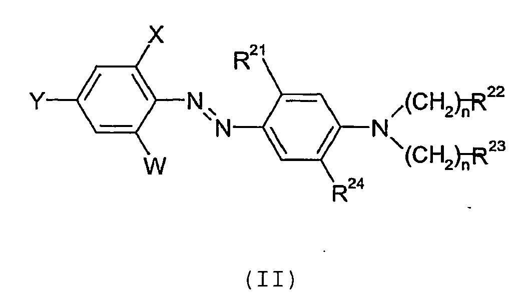 dans laquelle
X et W sont un hydrogène, chlore, brome, iode, nitro ou nitrile
Y est un nitro ou cyano
R²¹ est un hydrogène, alkyle en C₁ à C₄, alcoxy en C₁ à C₄ ou NHCOZ où Z est un hydrogène, alkyle en C₁ à C₄, amino, alcoxy en C₁ à C₄, aryle, aryloxy, aralkyle ou aralkyloxy,
R²² est un hydrogène, cyano, alcoxycarbonyle de formule (a), 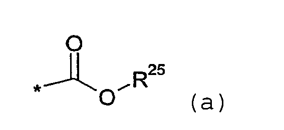
ou est un alcoxycarbonyloxy de formule (b) 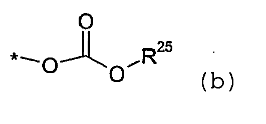 dans lesquelles R²⁵ est un alkyle en C₁ à C₄, aryle ou aralkyle
R²³ a l'une des significations de R²²
n est un entier de 2 à 4
R²⁴ est un hydrogène, alkyle en C₁ à C₄ ou alcoxy en C₁ à C₄
et facultativement un ou plusieurs, par exemple deux ou trois, de préférence 1 ou 2, colorants représentés par la formule générale (III) représentée et définie ci-dessous 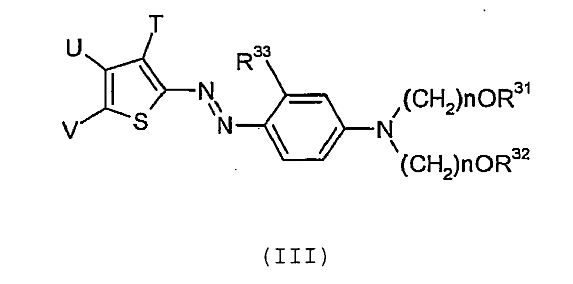 dans laquelle
T, U et V sont indépendamment un hydrogène, formyle, acétyle, chloro, bromo, cyano ou nitro
R³¹ et R³² sont indépendamment un alkyle en C₁ à C₄, alcényle, aryle, aralkyle, carbonylalkyle, carbonylalcényle, carbonylaryle, carbonylalcoxy- alkyle ou carbonylaryloxyalkyle
R³³ est un hydrogène, halogène, alkyle en C₁ à C₄ ou alcoxy en C₁ à C₄, NHCOR³⁴,
où
R³⁴ est un alkyle en C₁ à C₄ ou alcoxy en C₁ à C₄.

2. Mélange de colorants selon la revendication 1 comprenant un ou plusieurs colorants représentés par la formule générale (I) et un ou plusieurs colorants représentés par la formule générale (II).

3. Mélange de colorants selon la revendication 1 comprenant un ou plusieurs colorants représentés par la formule générale (I) et un ou plusieurs colorants représentés par la formule générale (III).

4. Mélange de colorants selon la revendication 1 comprenant un ou plusieurs colorants représentés par la formule générale (I), un ou plusieurs colorants représentés par la formule générale (II) et un ou plusieurs colorants représentés par la formule générale (III).

5. Mélange de colorants selon la revendication 1 où dans le cas où R³³ est NHCOR³⁴ alors (CH₂)ₙOR¹/R² sont remplacés par R³⁵ et R³⁶ comme indiqué dans la structure (IIIa) 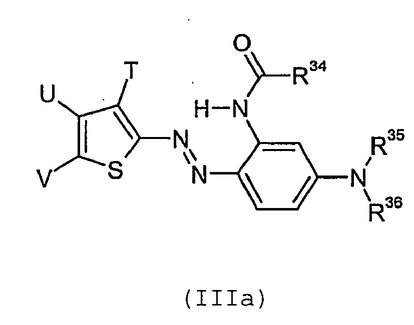 dans laquelle
R³⁵ et R³⁶ sont indépendamment un hydrogène, alkyle, alcényle, aryle, aralkyle, alcoxyalkyle, aryloxyalkyle, alcoxycarbonylalkyle et alkylcarbonylalcoxy.

6. Mélange de colorants selon au moins l'une des revendications 1 à 5 dans lequel la proportion en poids du colorant ou des colorants représentés par la formule générale (I) par rapport au colorant ou aux colorants représentés par la formule générale (II) ou (III) est de 95-5 % de (I) pour 5-95 % de (II) ou de (III).

7. Mélange de colorants selon au moins l'une des revendications 1 à 6 dans lequel la proportion en poids du colorant ou des colorants représentés par la formule générale (I) par rapport au colorant ou aux colorants représentés par la formule générale (II) ou (III) est de 95-50 % de (I) pour 5-50 % de (II) ou de (III).

8. Mélange de colorants selon au moins l'une des revendications 1 à 7 dans lequel la proportion en poids du colorant ou des colorants représentés par la formule générale (I) par rapport au colorant ou aux colorants représentés par la formule générale (II) ou (III) est de 85-60 % de (I) pour 15-40 % de (II) ou de (III).

9. Mélange de colorants selon la revendication 1 dans lequel la proportion en poids du colorant ou des colorants représentés par la formule générale (I) par rapport au colorant ou aux colorants représentés par la formule générale (II) et par rapport au colorant ou aux colorants représentés par la formule générale (III) est de 5-95 % de (I) pour 5 à 50 % de (II) pour 5-50 % de (III) .

10. Mélange de colorants selon la revendication 1 dans lequel la proportion en poids du colorant ou des colorants représentés par la formule générale (I) par rapport au colorant ou aux colorants représentés par la formule générale (II) et par rapport au colorant ou aux colorants représentés par la formule générale (III) est de 70-90 % de (I) pour 10-20 % de (II) pour 10-20 % de (III) .

11. Procédé pour la préparation d'un mélange de colorants selon une ou plusieurs des revendications 1 à 9 comprenant le mélange des composants colorants dans les quantités requises.

12. Composition comprenant un mélange de colorants selon une ou plusieurs des revendications 1 à 9 et au moins un agent dispersant, tensioactif ou agent mouillant.

13. Procédé pour la coloration d'une matière textile synthétique ou d'un mélange de fibres de celle-ci, lequel comprend l'application sur celui-ci d'un mélange de colorants selon une ou plusieurs des revendications 1 à 9.

14. Procédé selon la revendication 12, dans lequel la matière synthétique ou le mélange de fibres de celle-ci est un polyester ou un mélange polyester-cellulose ou polyester-laine.
